# EUROPEAN PATENT SPECIFICATION

(11) **EP 3 743 862 B1**
(45) Date of publication and mention of the grant of the patent: **25.06.2025**
(21) Application number: 18704701.4
(22) Date of filing: 25.01.2018
(51) Int. Cl.: G06Q 10/087, H04W 4/021, H04W 4/80

(54) **LOCATION AND TIME BASED SMART LABEL UPDATES FOR AUTO CURRENCY CONVERSION, SYMBOL AND ITEM LEVEL DESCRIPTION**
STANDORT- UND ZEITBASIERTE SMART LABEL UPDATES FÜR AUTOMATISCHE WÄHRUNGSUMRECHNUNG, SYMBOL- UND OBJEKTBESCHREIBUNG
MISES À JOUR D'ÉTIQUETTES INTELLIGENTES BASÉES SUR LA LOCATION ET LE TEMPS POUR LA CONVERSION AUTOMATIQUE DE LA MONNAIE, DES SYMBOLES ET DES DESCRIPTIONS D'OBJETS

(43) Date of publication of application: 02.12.2020
(73) Proprietor: Tyco Fire & Security GmbH, 8212 Neuhausen am Rheinfall (CH)
(72) Inventor: SEQUEIRA, Melwyn, F., Plantation, FL 33322 (US); PATTERSON, Hubert, A., Boca Raton, FL 33431 (US); MOHIUDDIN, Mohammad, Boynton Beach, FL 33437 (US)
(74) Representative: Meissner Bolte Nürnberg
(86) International application number: PCT/US2018/015325
(87) International publication number: WO 2019/147256

(56) References cited:
- CN-U- 204 028 969
- JP-A- 2009 201 926
- US-A1- 2001 020 935
- US-A1- 2005 149 391
- US-A1- 2010 065 632
- US-A1- 2017 270 471
- US-B1- 9 846 854

## Description

### BACKGROUND

### Statement of the Technical Field

The present disclosure concerns generally to electronic inventory systems. More particularly, the present invention relates to implementing systems and methods for providing location and time based smart label updates for auto currency conversion, symbol and item level description.

### Description of the Related Art

Electronic labels have been produced to automate shelf and item labeling processes in inventory systems. The electronic labels are designed to display item level information such as item descriptions, pricing, Stock Keeping Unit ("SKU") codes, and store promotional information. The electronic label displays comprise E Ink displays and/or Liquid Crystal Displays ("LCDs"). The electronic labels contain wireless radio technologies and are connected to an enterprise wireless communications network (e.g., a WiFi network and/or RFID network) via at least one access point (often located in the ceiling of a facility). Some systems also employ Infrared ("IR") based technology as a means of communicating with the electronic labels. The wireless radio and/or IR technology is used to provide the item level information to the electronic labels,
as for example disclosed in US2001/020935A1.

### SUMMARY

The present invention concerns implementing systems and methods for managing inventory pricing. The methods comprise: programming, at a first location (e.g., the United States and/or a manufacturer's facility), an Electronic Smart Tag ("EST") with at least first item level information comprising a first item description in a first language and a first item price in a first monetary currency; outputting the first item level information from the EST; and automatically replacing the first item level information being output from the EST with second item level information in response to the ESTs arrival at a second location (e.g., Japan and/or a distributor's facility) different than and remote from the first location. The second item level information comprises the first item description in a second language different than the first language and the first item price in a second monetary currency different than the first monetary currency.

In some scenarios, the EST is caused to enter a first operational mode in which at least one operation of the EST is disabled (e.g., after the first information has been displayed in on the EST's display). The at least one operation is exclusive of item level information output operations. The EST is also caused to transition from the first operational mode to a second operational mode in which all functions of the EST are enabled, in response to the ESTs arrival at the second location.

In those or other scenarios, the automatically replacing comprises performing operations by the EST to: retrieve the second item level information from an internal memory; cease outputting of the first item level information; and start outputting the second item level information. Alternatively, the automatically replacing comprises: performing operations by a remote computing device to program the EST with the second item level information; and performing operations by the EST to cease outputting the first item level information and start outputting the second item level information.

In those or other scenarios, the automatically replacing comprises performing operations by the EST to: convert the language and monetary currency of the first item level information to generate the second item level information; cease outputting the first item level information; and start outputting the second item level information. The conversion may be performed by the remote computing device rather than the EST. In this case, the automatically replacing comprises: performing operations by a remote computing device to generate the second item level information by converting the language and monetary currency of the first item level information; and performing operations by the EST to cease outputting the first item level information and start outputting the second item level information.

In those or yet other scenarios, the EST performs operations to determine if a current date is a pre-selected sale date for an item to which the EST is attached. The second item level information being output from the EST is replaced with third item level information comprising at least one of a sale price and a promotional message, it if is determined that the current date is a pre-selected sale date.

### BRIEF DESCRIPTION OF THE DRAWINGS

Embodiments will be described with reference to the following drawing figures, in which like numerals represent like items throughout the figures.
FIG. 1 is an illustration of an exemplary inventory system.
FIG. 2 is an illustration of an exemplary architecture for an EST.
FIG. 3 is an illustration of an exemplary architecture for a computing device (e.g., a server).
FIGS. 4A-4B (collectively referred to as "FIG. 4") provide a flow diagram of an exemplary method for managing inventory pricing.
FIG. 5 is an illustration of an exemplary EST displaying item level information.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout the specification may, but do not necessarily, refer to the same embodiment.

Furthermore, the described features, advantages and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

As used in this document, the singular form "a", "an", and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to".

Retailers have begun to deploy and test the viability of ESL based inventory systems in an effort to manage price, promotions and various other item level information. All this, to enable the enterprise to dynamically manage pricing based on demand, or otherwise push slow-moving inventory, while enhancing customer shopping experience and managing labor costs associated with manually managing the ESLs.

The present solution provides a way to automatically and dynamically update item level information of the Electronic Smart Tags ("ESTs") affixed to items (e.g., items offered for sale such as clothing) based on various trigger events. This solution allows merchants to bulk program item level information onto the ESTs at their distribution centers so that the ESTs comprise the proper pricing and item descriptions for a plurality of geographic locations (e.g., countries). In effect, the ESTs include item level information for use in a plurality of different countries. Accordingly, the item descriptions are provided to the ESTs in a plurality of different languages and item prices are provided in accordance with a plurality of monetary currencies. This information may be provided to the ESTs together at a single facility (e.g., a manufacturer's facility) or separately at different facilities (e.g., a manufacturer's facility, a distribution center and/or retail stores). When items tagged with the ESTs enter a new geographic location, the output item level information is automatically and dynamically modified so that item descriptions are presented in the particular language of the new geographic location and/or item prices are presented in accordance with the monetary currency of the new geographic location. Such ESTs provide an item inventorying solution with easier inventory management as compared to that of conventional inventorying techniques.

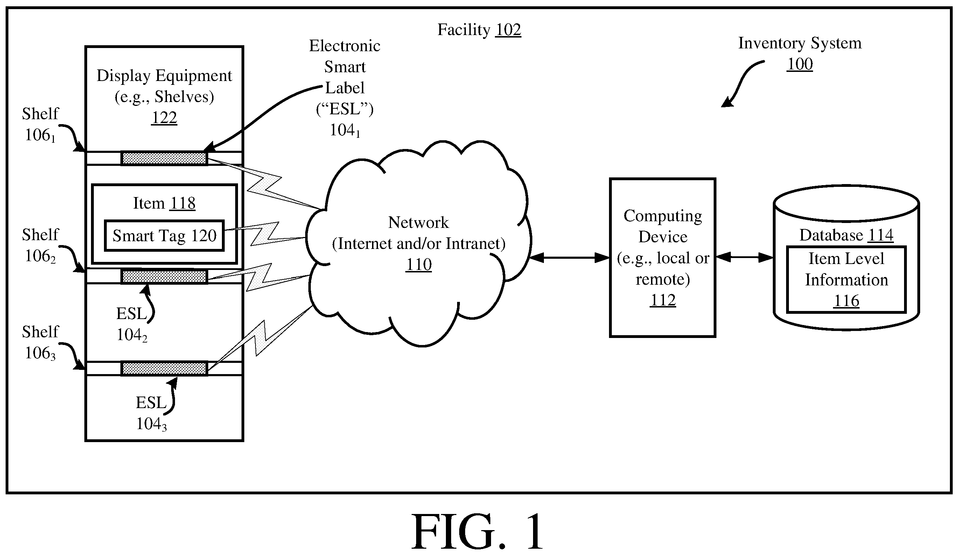

Referring now to FIG. 1, there is provided an illustration of an exemplary inventory system **100.** Inventory system **100** is entirely or at least partially disposed within a facility **102.** The facility **102** can include, but is not limited to, a manufacturer's facility, a distribution center facility, a retail store facility or other facility within a supply chain.

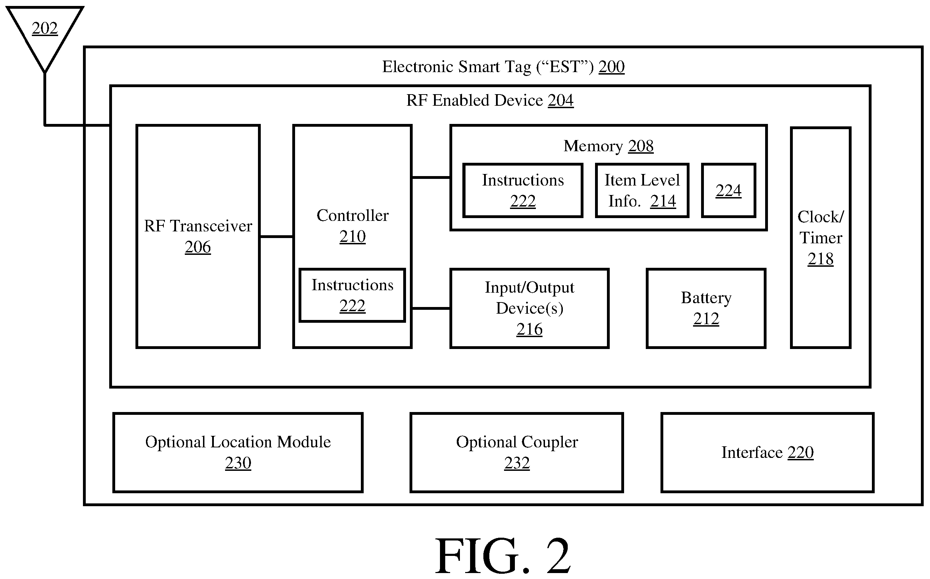

As shown in FIG. 1, at least one item **118** resides within the facility **102.** The item **118** has an EST **120** coupled thereto. This coupling is achieved via an adhesive (e.g., glue), a mechanical coupler (e.g., straps, clamps, snaps, etc.), a weld, chemical bond or other means. The EST 120 is generally configured to provide a visual and/or auditory output of item level information. The item level information includes, but is not limited to, an item description, an item regular price, an item sale price, a currency symbol, and/or a source of the item. The EST 120 will be described in detail below in relation to FIG. 2. The item level information can be output in a format selected from a plurality of formats based on a geographic location of the item, a date, and/or an item pricing status (e.g., whether the item is on sale). In a display context, the format is defined by a font parameter, a color parameter, a brightness parameter, and/or a display blinking parameter. In an auditory context, the format is defined by a volume parameter, a voice tone parameter, and/or a male/female voice selection parameter.

The item **118** is disposed on display equipment **122.** The display equipment includes, but is not limited to, shelves **106₁-106₃,** display cabinets, and/or exhibit cases. In the shelf scenario, each shelf **106₁-106₃** may have an ESL affixed thereto. ESLs are well known in the art, and therefore will not be described herein. Still, it should be understood that the ESLs display information relating to the items stored on the respective shelves.

The EST **120** and ESLs **104₁-104₃** comprise wireless communication components that enable the communication of item level information thereto and/or therefrom. The item level information is provided to the EST and ESLs from a computing device **112** via a network **110.** The computing device **112** can be local to the facility **102** as shown in FIG. 1 or remote from the facility **102.** The computing device **112** will be described in detail below. However, at this time, it should be understood that the computing device **112** is configured to: write data to and read data from a database **114,** EST **120** and/or ESLs **104₁-104₃;** and/or perform language and currency conversion operations using item level information obtained from the database **114,** EST **120** and/or ESLs **104₁-104₃**. The data can include, but is not limited to, item level information **116.**

Referring now to FIG. 2, there is provided an illustration of an exemplary architecture for an EST **200.** EST **120** and/or ESLs **104₁-104₃** of FIG. 1 is/are the same as or substantially similar to EST **200.** As such, the discussion of EST **200** is sufficient for understanding the EST **120** and/or ESLs **104₁-104₃** of FIG. 1.

The EST **200** can include more or less components than that shown in FIG. 2. However, the components shown are sufficient to disclose an illustrative embodiment implementing the present solution. Some or all of the components of the EST **200** can be implemented in hardware, software and/or a combination of hardware and software. The hardware includes, but is not limited to, one or more electronic circuits. The electronic circuit(s) may comprise passive components (e.g., capacitors and resistors) and active components (e.g., processors) arranged and/or programmed to implement the methods disclosed herein.

The hardware architecture of FIG. 2 represents a representative EST **200** configured to facilitate improved inventory pricing management. In this regard, the EST **200** is configured for allowing data to be exchanged with an external device (e.g., computing device **112** of FIG. 1) via wireless communication technology. The wireless communication technology can include, but is not limited to, Radio Frequency ("RF") communication technology. RF communication technology is well known in the art, and therefore will not be described in detail herein. Any known or to be known RF communication technology or other wireless communication technology can be used herein without limitation.

The components **206-218** shown in FIG. 2 may be collectively referred to herein as the RFID enabled device **204,** and include a power source **212** (e.g., a battery), a memory **208** and a clock/timer **218.** Memory **208** may be a volatile memory and/or a non-volatile memory. For example, the memory **208** can include, but is not limited to, Random Access Memory ("RAM"), Dynamic RAM ("DRAM"), Static RAM ("SRAM"), Read Only Memory ("ROM") and flash memory. The memory **408** may also comprise unsecure memory and/or secure memory.

The RFID enabled device **204** comprises an antenna **202** for allowing data to be exchanged with the external device via RFID technology. The antenna **202** is configured to receive RFID signals from the external device and/or transmit RFID signals generated by the RFID enabled device **204.** In some scenarios, the antenna **202** comprises a low-power near-field antenna. The low-power near-field antenna includes, but is not limited to, a chip antenna or a loop antenna.

The RFID enabled device **204** also comprises an RF transceiver **206.** RF transceivers are well known in the art, and therefore will not be described herein. However, it should be understood that the RF transceiver **206** generates and transmits RF carrier signals to external devices, as well as receives RF signals transmitted from external devices. In this way, the RFID enabled device **204** facilitates the registration, identification, location and/or tracking of an item (e.g., item **118** of FIG. 1) to which the EST **200** is coupled. The RFID enabled device **204** also facilitates the automatic and dynamic modification of item level information that is being or is to be output from the EST **200** in response to certain trigger events. The trigger events can include, but are not limited to, the EST's arrival at a particular facility (e.g., facility **102** of FIG. 1), the EST's arrival in a particular country or geographic region, and/or a date occurrence.

Item level information **214** and/or other information **224** associated with the identification and/or location of the EST **200** can be stored in memory **208** of the RFID enabled device **204** and/or communicated to other external devices (e.g., computing device **112** of FIG. 1) via RF transceiver **206** and/or interface **220** (e.g., an Internet Protocol or cellular network interface). For example, the RFID enabled device **204** can communicate information specifying a timestamp, a unique identifier, item description, item price, a currency symbol and/or location information to an external computing device. The external computing device (e.g., server) can then store the information in a database (e.g., database **114** of FIG. 1) and/or use the information during language and/or currency conversion operations.

The RFID enabled device **204** also comprises a controller **210** and input/output devices **216.** The controller **210** can also execute instructions **222** implementing methods for facilitating the management of item pricing. In this regard, the controller 210 includes a processor (or logic circuitry that responds to instructions) and the memory **208** includes a computer-readable storage medium on which is stored one or more sets of instructions **222** (e.g., software code) configured to implement one or more of the methodologies, procedures, or functions described herein. The instructions **222** can also reside, completely or at least partially, within the controller **210** during execution thereof by the EST **200.** The memory **208** and the controller **210** also can constitute machine-readable media. The term "machine-readable media", as used here, refers to a single medium or multiple media (e.g., a centralized or distributed database, and/or associated caches and servers) that store the one or more sets of instructions **222.** The term "machine-readable media", as used here, also refers to any medium that is capable of storing, encoding or carrying a set of instructions **222** for execution by the EST **200** and that cause the EST **200** to perform any one or more of the methodologies of the present disclosure.

The input/output devices can include, but are not limited to, a display (e.g., an E Ink display or LCD display), a speaker, a keypad and/or light emitting diodes. The display is used to present item level information in a textual format and/or graphical format. Similarly, the speaker may be used to output item level information in an auditory format. The speaker and/or light emitting diodes may be used to output alerts for drawing a person's attention to the EST **200** and/or for notifying the person of a particular pricing status (e.g., on sale status) of the item to which the EST is coupled.

The EST **200** also comprises an optional location module **230.** The location module **230** is generally configured to determine the geographic location of the EST at any given time. For example, in some scenarios, the location module **230** employs Global Positioning System ("GPS") technology and/or Internet based local time acquisition technology. The present solution is not limited to the particulars of this example. Any known or to be known technique for determining a geographic location can be used herein without limitation.

The clock/timer **218** is configured to determine a date, a time, and/or an expiration of a pre-defined period of time. Technique for determining these listed items are well known in the art, and therefore will not be described herein. Any known or to be known technique for determining these listed items can be used herein without limitation.

The optional coupler **232** is provided to securely or removably couple the EST **200** to an item (e.g., item **118** of FIG. 1). The coupler **232** includes, but is not limited to, a mechanical coupling means (e.g., a strap, clip, clamp, snap) and/or adhesive (e.g., glue or sticker). The coupler **232** is optional since the coupling can be achieved via a weld and/or chemical bond.

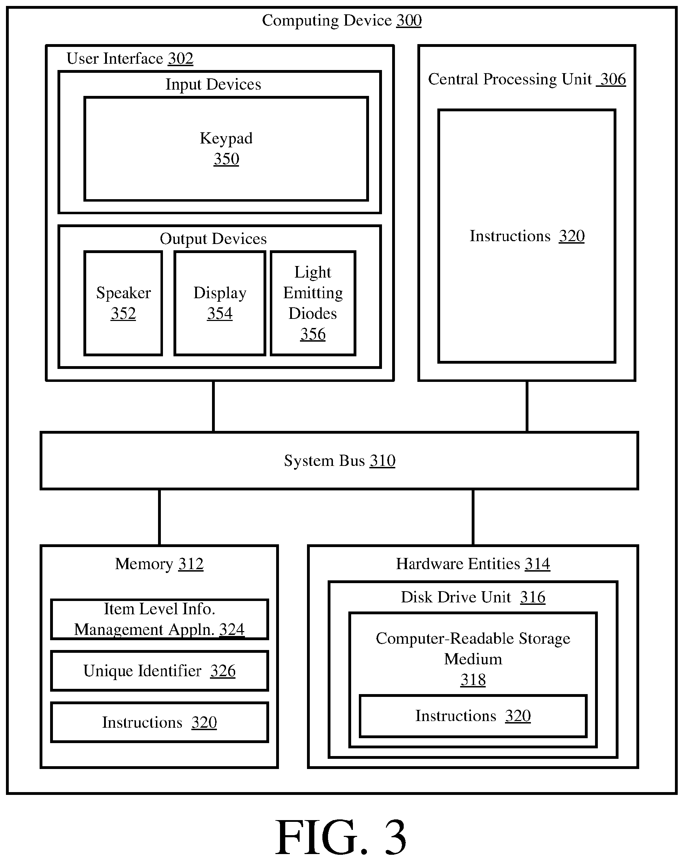

Referring now to FIG. 3, there is provided a detailed block diagram of an exemplary architecture for a computing device **300.** Computing device **112** of FIG. 1 is the same as or substantially similar to computing device **300.** As such, the following discussion of computing device **300** is sufficient for understanding computing device **112.**

Computing device **300** may include more or less components than those shown in FIG. 3. However, the components shown are sufficient to disclose an illustrative embodiment implementing the present solution. The hardware architecture of FIG. 3 represents one embodiment of a representative Computing device configured to facilitate improved inventory pricing management. As such, the computing device **300** of FIG. 3 implements at least a portion of a method for automatically and dynamically modifying item level information output from ESTs in accordance with the present solution.

Some or all the components of the computing device **300** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 3, the computing device **300** comprises a user interface **302,** a Central Processing Unit ("CPU") **306,** a system bus **310,** a memory **312** connected to and accessible by other portions of computing device **300** through system bus **310,** and hardware entities **314** connected to system bus **310.** The user interface can include input devices (e.g., a keypad **350**) and output devices (e.g., speaker **352,** a display **354,** and/or light emitting diodes **356**), which facilitate user-software interactions for controlling operations of the computing device **300.**

At least some of the hardware entities **314** perform actions involving access to and use of memory **312,** which can be a RAM, a disk driver and/or a Compact Disc Read Only Memory ("CD-ROM"). Hardware entities **314** can include a disk drive unit **316** comprising a computer-readable storage medium **318** on which is stored one or more sets of instructions **320** (e.g., software code) configured to implement one or more of the methodologies, procedures, or functions described herein. The instructions **320** can also reside, completely or at least partially, within the memory **312** and/or within the CPU **306** during execution thereof by the computing device **300.** The memory **312** and the CPU **306** also can constitute machine-readable media. The term "machine-readable media", as used here, refers to a single medium or multiple media (e.g., a centralized or distributed database, and/or associated caches and servers) that store the one or more sets of instructions **320.** The term "machine-readable media", as used here, also refers to any medium that is capable of storing, encoding or carrying a set of instructions **320** for execution by the computing device **300** and that cause the computing device **300** to perform any one or more of the methodologies of the present disclosure.

In some scenarios, the hardware entities **314** include an electronic circuit (e.g., a processor) programmed for facilitating the provision of item level information in a language and currency used in a given geographic location whereat or wherein an EST or ESL resides. In this regard, it should be understood that the electronic circuit can access and run an item level information management application **324** installed on the computing device **300.** The software application **324** is generally operative to: obtain item level information and/or other information from ESTs and/or ESLs; program item level information onto ESTs and/or ESLs; convert the language, pricing and/or currency symbol of item level information; and/or facilitate registration of ESTs and/or ESLs with inventory systems. Other functions of the software application **324** will become apparent as the discussion progresses.

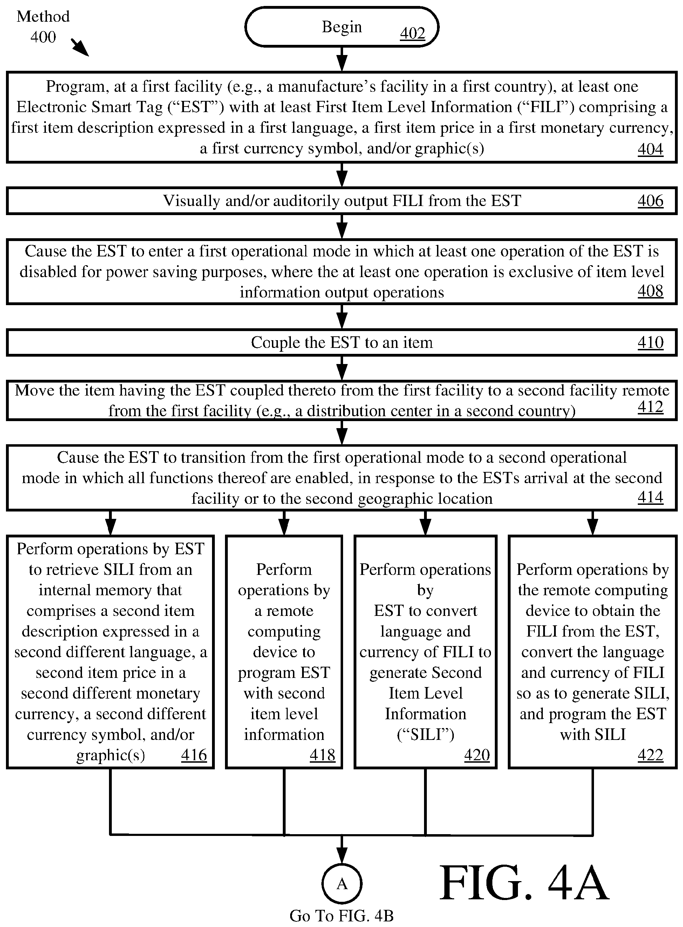

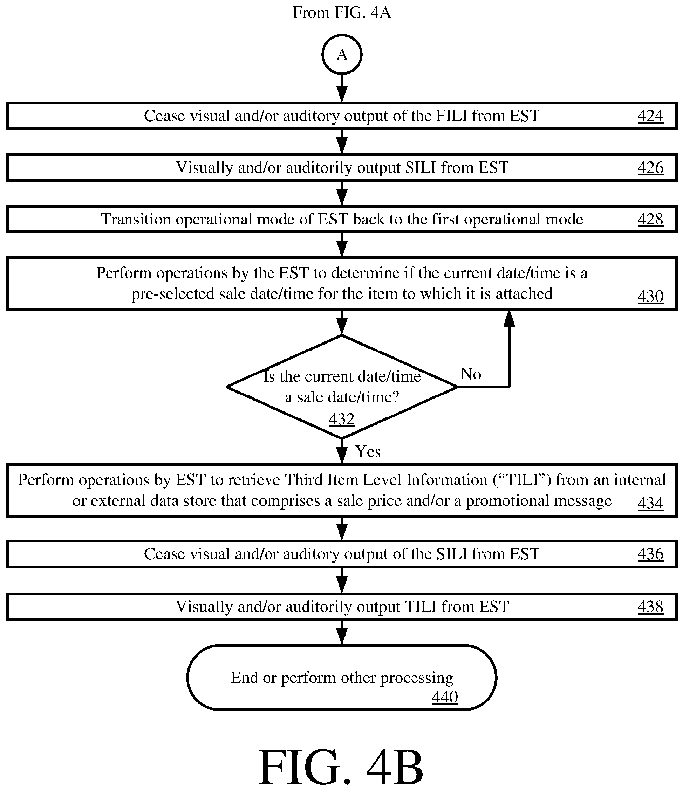

Referring now to FIG. 4, there is provided a flow diagram of an exemplary method **400** for managing item level information output from ESTs (e.g., EST **118** of FIG. 1). Method **400** begins with step **402** and continues with step **404** where at least one EST is programmed with at least first item level information at a first facility (e.g., a manufacturer's facility in a first country such as the United States). The first item level information includes, but is not limited to, a first item description expressed in a first language (e.g., English), a first item price in a first monetary currency (e.g., dollars), a first currency symbol (e.g., $), and/or graphics. The first item description can include, but is not limited to, an item name, an item weight, item size, item color, an item type identifier, and/or information indicating whether the item was grown organically or produced in a particular manner.

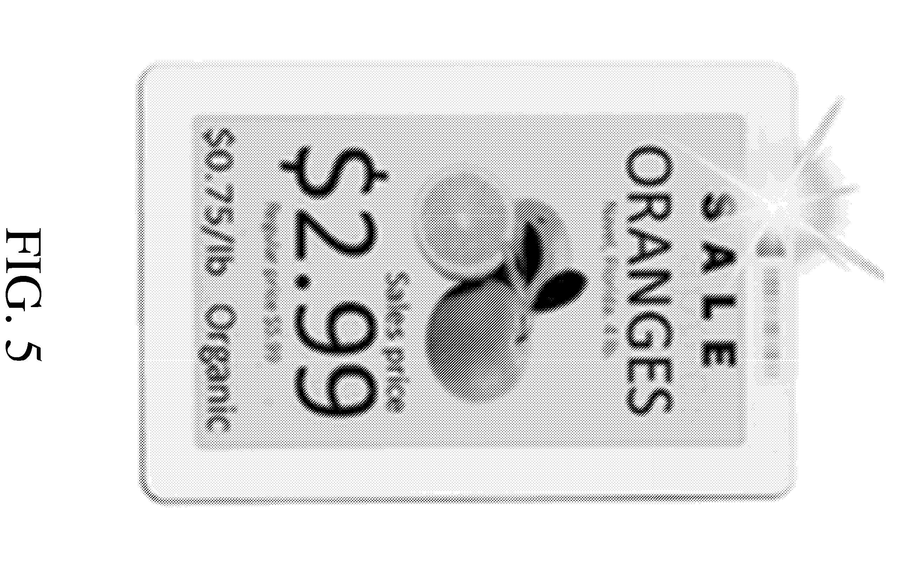

The programmed first item level information is then visually and/or auditorily output from the EST via its output device(s) (e.g., output devices **216** of FIG. 2), as shown by **406.** The visual output is achieved using a display (e.g., an E Ink display) of the EST, and/or the auditory output is achieved using a speaker of the EST. The first item level information can be output in a format selected from a plurality of formats based on a geographic location of the item, a date, and/or an item pricing status (e.g., whether the item is on sale). In a display context, the format is defined by a font parameter, a color parameter, a brightness parameter, and/or a display blinking parameter. An illustration of an exemplary EST displaying item level information is provided in FIG. 5. In an auditory context, the format is defined by a volume parameter, a voice tone parameter, and/or a male/female voice selection parameter.

Next in **408,** the EST is caused to enter a first operational mode in which at least one operation of the EST is disabled for power saving purposes. The at least one operation is exclusive of item level information output operations. Accordingly, the EST continues to output the first item level information when it is in the first operational mode or power saving mode.

The EST is coupled to an item (e.g., item **118** of FIG. 1) as shown by **410.** Notably, the EST can be coupled to the item before or after it has been programmed with the first item level information. As such, the coupling of **410** can alternatively be performed prior to the operations of **404,** rather than subsequent to the operations of **410** as shown in FIG. 4A.

Upon completing **410,** the item is moved in **412** from the first facility (e.g., a manufacturer's facility in a first country such as the United States) to a second facility (e.g., a distributor's facility in a second country such as Japan) that is remote from the first facility. The first facility is located at a first geographic location (e.g., California, United States). The second facility is located at a second geographic location (e.g., Tokyo, Japan). The second geographic location may be in a different country than the country in which the first facility resides.

As is known, different countries can employ different languages and different monetary currencies. Thus, the item level information needs to be modified to reflect these differences such that the item level information is output from the ESL in the language and currency of the second geographic location. The process of converting language and currency has traditionally been quite cumbersome especially when dealing with relatively large inventories. Accordingly, the present solution is designed to address this drawback of conventional inventory systems. In this regard, method **400** continues with **414-426** where an automatic process is performed to dynamically change the language and currency of the item level information. **414-426** are discussed below. In **414-426,** the conventional inventory system requirement for the duplication of merchandise handling is eliminated. Also, the present solution provides a process that saves time and manual labor as compared to that of conventional inventory systems.

In response to the EST's arrival to the second geographic location (e.g., second country) and/or at the second facility, the EST is caused in **414** to transition from the first operational mode to a second operational mode in which all functions thereof are enabled. In this regard, it should be noted that the EST is configured to register with a local inventory system and/or obtain its corresponding geo location. Techniques for device registration are well known in the art, and therefore will not be described herein. Any known or to be known device registration technique can be used herein without limitation. The geo location can be obtained using Global Positioning System ("GPS") technology, local Internet/Intranet connectivity technology, and/or Internet based local time technology. The operational mode transition can be triggered by the EST's registration with the local inventory system and/or the EST's determination that the obtained geo location matches geo location information stored in its internal memory (e.g., memory **208** of FIG. 2).

Subsequently, operations are performed to obtain by the EST and/or to provide to the EST second item level information in one of **416, 418, 420** and **422.** In **416,** the EST performs operations to retrieve the second item level information from its internal memory (e.g., memory **208** of FIG. 2). The second item level information includes, but is not limited to, a second item description expressed in a second different language, a second item price in a second different monetary currency, a second different currency symbol, and/or graphic(s). In this case, the EST was pre-programmed with the second item level information at the first facility (e.g., a manufacturer's facility in a first country such as the United States).

Alternatively in **418,** a remote computing device (e.g., computing device **112** of FIG. 1) performs operations to program the EST with the second item level information at the second facility. In this case, the EST previously registered with the inventory system (e.g., inventory system **100** of FIG. 1) upon its arrival at the second facility as discussed above and/or paired with an SRC device of the inventory system.

In other scenarios, the EST performs operations in **420** to convert the language and/or currency of the first item level information to generate the second item level information. Methods for converting languages and currencies are well known in the art, and therefore will not be described herein. Any known method for language and/or currency conversion can be used herein without limitation.

In yet other scenarios, this conversion is performed by the remote computing device. Accordingly, **422** involves performing operations by the remote computing device to: obtain the first item level information from the EST; convert the language and currency of the first item level information so as to generate second item level information; and program the EST with the second item level information.

After completing **416, 418, 420** or **422,** method **400** continues with **424** of FIG. 4B. As shown in FIG. 4B, **424** involves ceasing the visual and/or auditory output of the first item level information from the EST. Next in **426,** the second item level information is output from the ESL in a visual and/or auditory manner. The operational mode of the EST is then transitioned back to its first operational mode (or power save mode) in **428.**

In the first operational mode, the EST may perform operations to keep track of the date and/or time. As such, method **400** comprises **430-436** in which the EST performs operations to: determine if the current date/time is a pre-selected sale date/time (e.g., Black Friday) for the item to which it is attached; and replace the displayed second item level information with third item level information if the current date/time is a pre-selected sale date/time. The pre-selected sale date/time can be obtained from an internal memory (e.g., memory **208** of FIG. 1) or an external data store (e.g., database **114** of FIG. 1). A comparison of the current date/time to the pre-selected sale date/time is performed to make the determination as to whether or not the current date/time is a pre-selected sale date/time. The current date/time is deemed to be a sale date/time when it matches the pre-selected sale date/time. The third item level information includes, but is not limited to, a sale price and/or a promotional message. Upon completing **436, 440** is performed where method **400** ends or other processing is performed.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application. Thus, the breadth and scope of the present invention should not be limited by any of the above described embodiments. Rather, the scope of the invention should be defined in accordance with the following claims and their equivalents.

## Claims

1. A method for managing inventory pricing, comprising:
- programming, at a first location, an Electronic Smart Tag, EST, (120, 200) with at least first item level information comprising a first item description in a first language and a first item price in a first monetary currency;
- outputting the first item level information from the EST (120, 200); and
- automatically replacing the first item level information being output from the EST (120, 200) with second item level information in response to the EST's arrival at a second location different than and remote from the first location, the second item level information comprising the first item description converted into a second language different than the first language and the first item price converted into a second monetary currency different than the first monetary currency.

2. The method according to claim 1,
wherein the first location is in a first country and the second location is in a second different country.

3. The method according to claim 1 or 2,
further comprising causing the EST (120, 200) to enter a first operational mode in which at least one operation of the EST (120, 200) is disabled, where the at least one operation is exclusive of item level information output operations, and
further preferably comprising causing the EST (120, 200) to transition from the first operational mode to a second operational mode in which all functions of the EST (120, 200) are enabled, in response to the EST's arrival at the second location.

4. The method according to one of claims 1 to 3,
wherein the automatically replacing comprises performing operations by the EST (120, 200) to:
- retrieve the second item level information from an internal memory (208);
- cease outputting of the first item level information; and
- start outputting the second item level information.

5. The method according to one of claims 1 to 3,
wherein the automatically replacing comprises:
- performing operations by a remote computing device (112) to program the EST (120, 200) with the second item level information; and
- performing operations by the EST (120, 200) to cease outputting the first item level information and start outputting the second item level information.

6. The method according to one of claims 1 to 3,
wherein the automatically replacing comprises performing operations by the EST (120, 200) to:
- convert the language and monetary currency of the first item level information to generate the second item level information;
- cease outputting the first item level information; and
- start outputting the second item level information.

7. The method according to one of claims 1 to 3,
wherein the automatically replacing comprises:
- performing operations by a remote computing device (112) to generate the second item level information by converting the language and monetary currency of the first item level information; and
- performing operations by the EST (120, 200) to cease outputting the first item level information and start outputting the second item level information.

8. The method according to one of claims 1 to 7,
further comprising performing operations by the EST (120, 200) to determine if a current date is a pre-selected sale date for an item to which the EST (120, 200) is attached, and
further preferably comprising performing operations by the EST (120, 200) to replace the second item level information being output therefrom with third item level information comprising at least one of a sale price and a promotional message, it if is determined that the current date is a pre-selected sale date.

9. An Electronic Smart Tag, EST, (120, 200) comprising:
- a processor; and
- a computer-readable storage medium comprising programming instructions that are configured to cause the processor to implement a method for managing inventory, wherein the programming instructions comprise instructions to:
- receive, from a first device located at a first location, at least first item level information comprising a first item description in a first language and a first item price in a first monetary currency;
- output the first item level information; and
- automatically replace the first item level information being output with second item level information in response to the EST's arrival at a second location different than and remote from the first location, the second item level information comprising the first item description converted into a second language different than the first language and the first item price converted into a second monetary currency different than the first monetary currency.

10. The EST (120, 200) according to claim 9,
wherein the first location is in a first country and the second location is in a second different country.

11. The EST (120, 200) according to claim 9 or 10,
wherein the programming instructions further comprise instructions to cause the EST (120, 200) to enter a first operational mode in which at least one operation of the EST (120, 200) is disabled, where the at least one operation is exclusive of item level information output operations, wherein the programming instructions further preferably comprise instructions to cause the EST (120, 200) to transition from the first operational mode to a second operational mode in which all functions of the EST (120, 200) are enabled, in response to the EST's arrival at the second location.

12. The EST (120, 200) according to one of claims 9 to 11,
wherein the first item information is automatically replaced with the second item level information by:
- retrieving the second item level information from an internal memory (208) of the EST (120, 200) or from a remote computing device (112);
- ceasing the output of the first item level information from the EST (120, 200); and
- starting to output the second item level information from the EST (120, 200).

13. The EST (120, 200) according to one of claims 9 to 11,
wherein the first item level information is automatically replaced with the second item level information by:
- converting the language and monetary currency of the first item level information to generate the second item level information;
- ceasing the output of the first item level information from the EST (120, 200); and
- starting to output the second item level information from the EST (120, 200).

14. The EST (120, 200) according to one of claims 9 to 11,
wherein the first item level information is automatically replaced with the second item level information by:
- receiving the second item level information which was generated by a remote computing device (112) via a conversion of the language and monetary currency of the first item level information;
- ceasing the output of the first item level information from the EST (120, 200); and
- starting to output the second item level information from the EST (120, 200).

15. The EST (120, 200) according to one of claims 9 to 14,
wherein the programming instructions further comprise instructions to determine if a current date is a pre-selected sale date for an item to which the EST (120, 200) is attached,
wherein the programming instructions further preferably comprise instructions to replace the second item level information being output from the EST (120, 200) with third item level information comprising at least one of a sale price and a promotional message, it if is determined that the current date is a pre-selected sale date.

## Patentansprüche

1. Ein Verfahren zum Verwalten von Bestandspreisen, welches Folgendes umfasst:
- Programmieren eines Elektronischen Intelligenten Etiketts, EST - Electronic Smart Tag (120, 200) an einem ersten Ort mit mindestens einer Information auf erster Artikelebene, die eine erste Artikelbeschreibung in einer ersten Sprache und einen ersten Artikelpreis in einer ersten Geldwährung umfasst;
- Ausgeben der Information auf erster Artikelebene von dem EST (120, 200); und
- automatisches Ersetzen der von dem EST (120, 200) ausgegebenen Information auf erster Artikelebene durch Information auf zweiter Artikelebene als Reaktion auf die Ankunft des EST an einem zweiten Ort, der sich von dem ersten Ort unterscheidet und von diesem entfernt ist, wobei die Information auf zweiter Artikelebene die erste Artikelbeschreibung umfasst, die in eine zweite Sprache umgewandelt wurde, die sich von der ersten Sprache unterscheidet, und den ersten Artikelpreis, der in eine zweite Geldwährung umgewandelt wurde, die sich von der ersten Geldwährung unterscheidet.

2. Das Verfahren nach Anspruch 1,
wobei sich der erste Ort in einem ersten Land und der zweite Ort in einem zweiten, anderen Land befindet.

3. Das Verfahren nach Anspruch 1 oder 2,
ferner umfassend das Bewirken, dass das EST (120, 200) in einen ersten Betriebsmodus eintritt, in dem mindestens eine Operation des EST (120, 200) deaktiviert ist, wobei die mindestens eine Operation ausschließlich Informationsausgabeoperationen auf Artikelebene umfasst, und ferner vorzugsweise umfassend das Bewirken, dass das EST (120, 200) als Reaktion auf die Ankunft des EST am zweiten Ort vom ersten Betriebsmodus in einen zweiten Betriebsmodus übergeht, in dem alle Funktionen des EST (120, 200) aktiviert sind.

4. Das Verfahren nach einem der Ansprüche 1 bis 3, wobei das automatische Ersetzen die Durchführung von Operationen durch das EST (120, 200) umfasst, um:
- die Information auf zweiter Artikelebene aus einem internen Speicher (208) abzurufen;
- die Ausgabe der Information auf erster Artikelebene zu beenden; und
- mit der Ausgabe der Information auf zweiter Artikelebene zu beginnen.

5. Das Verfahren nach einem der Ansprüche 1 bis 3, wobei das automatische Ersetzen Folgendes umfasst:
- Durchführen von Operationen durch ein entferntes Rechengerät (112), um das EST (120, 200) mit der Information auf zweiter Artikelebene zu programmieren; und
- Durchführen von Operationen durch das EST (120, 200), um die Ausgabe der Information auf erster Artikelebene zu beenden und die Ausgabe der Information auf zweiter Artikelebene zu starten.

6. Das Verfahren nach einem der Ansprüche 1 bis 3, wobei das automatische Ersetzen die Durchführung von Operationen durch das EST (120, 200) umfasst, um:
- die Sprache und die Währung der Information auf erster Artikelebene zu konvertieren, um die Information auf zweiter Artikelebene zu erzeugen;
- die Ausgabe der Information auf erster Artikelebene zu beenden; und
- mit der Ausgabe der Information auf zweiter Artikelebene zu beginnen.

7. Das Verfahren nach einem der Ansprüche 1 bis 3, wobei das automatische Ersetzen Folgendes umfasst:
- Durchführen von Operationen durch ein entferntes Rechengerät (112) zum Erzeugen der Information auf zweiter Artikelebene durch Konvertieren der Sprache und der Geldwährung der Information auf erster Artikelebene; und
- Durchführen von Operationen durch das EST (120, 200), um die Ausgabe der Information auf erster Artikelebene zu beenden und die Ausgabe der Information auf zweiter Artikelebene zu starten.

8. Das Verfahren nach einem der Ansprüche 1 bis 7, ferner umfassend das Durchführen von Operationen durch das EST (120, 200), um zu bestimmen, ob ein aktuelles Datum ein vorausgewähltes Verkaufsdatum für einen Artikel ist, an dem das EST (120, 200) angebracht ist, und
ferner vorzugsweise umfassend das Durchführen von Operationen durch das EST (120, 200), um die von ihm ausgegebenen Informationen auf der zweiten Artikelebene durch Informationen auf der dritten Artikelebene zu ersetzen, die mindestens einen von einem Verkaufspreis und einer Werbebotschaft umfassen, wenn bestimmt wird, dass das aktuelle Datum ein vorausgewähltes Verkaufsdatum ist.

9. Elektronisches Intelligentes Etikett, EST, (120, 200), welches Folgendes umfasst:
- einen Prozessor; und
- ein computerlesbares Speichermedium, das Programmieranweisungen enthält, die so konfiguriert sind, dass sie den Prozessor veranlassen, ein Verfahren zur Verwaltung des Inventars zu implementieren, wobei die Programmieranweisungen Anweisungen enthalten, um:
- von einem ersten Gerät, das sich an einem ersten Ort befindet, mindestens eine Information auf erster Artikelebene, die eine erste Artikelbeschreibung in einer ersten Sprache und einen ersten Artikelpreis in einer ersten Geldwährung umfasst, zu empfangen;
- die Information auf erster Artikelebene auszugeben; und
- automatisch die ausgegebene Information auf erster Artikelebene durch eine Information auf zweiter Artikelebene als Reaktion auf die Ankunft des EST an einem zweiten Ort, der sich von dem ersten Ort unterscheidet und von diesem entfernt ist, zu ersetzen, wobei die Information auf zweiter Artikelebene die erste Artikelbeschreibung umfasst, die in eine zweite Sprache umgewandelt wurde, die sich von der ersten Sprache unterscheidet, und den ersten Artikelpreis, der in eine zweite Geldwährung umgewandelt wurde, die sich von der ersten Geldwährung unterscheidet.

10. Das EST (120, 200) nach Anspruch 9,
wobei sich der erste Ort in einem ersten Land und der zweite Ort in einem zweiten, anderen Land befindet.

11. Das EST (120, 200) nach Anspruch 9 oder 10,
wobei die Programmieranweisungen ferner Anweisungen umfassen, die bewirken, dass das EST (120, 200) in einen ersten Betriebsmodus eintritt, in dem mindestens eine Operation des EST (120, 200) deaktiviert ist, wobei die mindestens eine Operation ausschließlich Informationsausgabeoperationen auf Artikelebene umfasst, wobei die Programmieranweisungen ferner vorzugsweise Anweisungen umfassen, die bewirken, dass das EST (120, 200) als Reaktion auf die Ankunft des EST am zweiten Ort vom ersten Betriebsmodus in einen zweiten Betriebsmodus übergeht, in dem alle Funktionen des EST (120, 200) aktiviert sind.

12. Das EST (120, 200) nach einem der Ansprüche 9 bis 11,
wobei die erste Artikelinformation automatisch durch die Information auf zweiter Artikelebene ersetzt wird durch:
- Abrufen der Information auf zweiter Artikelebene aus einem internen Speicher (208) des EST (120, 200) oder von einem entfernten Rechengerät (112);
- Beendigung der Ausgabe der Information auf erster Artikelebene von dem EST (120, 200); und
- Beginnen der Ausgabe der Information auf zweiter Artikelebene von dem EST (120, 200).

13. Das EST (120, 200) nach einem der Ansprüche 9 bis 11,
wobei die Information auf erster Artikelebene automatisch durch die Information auf zweiter Artikelebene ersetzt wird durch:
- die Konvertierung der Sprache und der Währung der Information auf erster Artikelebene, um die Information auf zweiter Artikelebene zu erzeugen;
- Beendigung der Ausgabe der Information auf erster Artikelebene von dem EST (120, 200); und
- Beginnen der Ausgabe der Information auf zweiter Artikelebene von dem EST (120, 200).

14. Das EST (120, 200) nach einem der Ansprüche 9 bis 11,
wobei die Information auf erster Artikelebene automatisch durch die Information auf zweiter Artikelebene ersetzt wird durch:
- Empfangen der Information auf zweiter Artikelebene, die von einem entfernten Rechengerät (112) durch eine Konvertierung der Sprache und der Währung der Information auf erster Artikelebene erzeugt wurde;
- Beendigung der Ausgabe der Information auf erster Artikelebene von dem EST (120, 200); und
- Beginnen der Ausgabe der Information auf zweiter Artikelebene von dem EST (120, 200).

15. Das EST (120, 200) nach einem der Ansprüche 9 bis 14,
wobei die Programmieranweisungen ferner Anweisungen umfassen, um zu bestimmen, ob ein aktuelles Datum ein vorausgewähltes Verkaufsdatum für einen Artikel ist, an dem das EST (120, 200) angebracht ist,
wobei die Programmieranweisungen ferner vorzugsweise Anweisungen umfassen, um die Information auf der zweiten Artikelebene, die von dem EST (120, 200) ausgegeben wird, durch eine Information auf der dritten Artikelebene zu ersetzen, die mindestens eins von einem Verkaufspreis und einer Werbebotschaft umfasst, wenn bestimmt wird, dass das aktuelle Datum ein vorausgewähltes Verkaufsdatum ist.

## Revendications

1. Procédé de gestion de la tarification des stocks, comprenant :
- la programmation, à un premier emplacement, d'une étiquette électronique intelligente (EST) (120, 200) avec au moins des premières informations au niveau de l'article, comprenant une première description d'article dans une première langue et un premier prix de l'article dans une première devise monétaire ;
- l'émission des premières informations au niveau de l'article à partir de l'EST (120, 200) ; et
- le remplacement automatique des premières informations au niveau de l'article étant émises à partir de l'EST (120, 200) par les deuxièmes informations au niveau de l'article en réponse à l'arrivée de l'EST au niveau d'un second emplacement différent et éloigné du premier emplacement, les deuxièmes informations au niveau de l'article comprenant la description du premier article converti en une seconde langue différente de la première langue et le prix du premier article converti en une seconde devise monétaire différente de la première devise monétaire.

2. Procédé selon la revendication 1,
dans lequel le premier emplacement se trouve dans un premier pays et le second emplacement se trouve dans un second pays différent.

3. Procédé selon la revendication 1 ou 2,
Comprenant en outre le fait de faire entrer l'EST (120, 200) dans un premier mode opérationnel dans lequel au moins une opération de l'EST (120, 200) est désactivée, où l'au moins une opération est exclusive des opérations de production d'informations au niveau de l'article, et
comprenant de préférence en outre, le fait de faire passer l'EST (120, 200) du premier mode opérationnel à un second mode opérationnel dans lequel toutes les fonctions de l'EST (120, 200) sont activées, en réponse à l'arrivée de l'EST au second emplacement.

4. Procédé selon l'une des revendications 1 à 3,
dans lequel le remplacement automatique comprend l'exécution d'opérations par l'EST (120, 200) pour :
- récupérer les deuxièmes informations au niveau de l'article dans une mémoire interne (208) ;
- cesser la production des premières informations au niveau de l'article ; et
- commencer la production des deuxièmes informations au niveau de l'article.

5. Procédé selon l'une des revendications 1 à 3,
dans lequel le remplacement automatique comprend :
- l'exécution d'opérations par un dispositif informatique distant (112) pour programmer l'EST (120, 200) avec les deuxièmes informations au niveau de l'article ; et
- l'exécution d'opérations par l'EST (120, 200) pour cesser la production des premières informations au niveau de l'article et commencer à émettre les deuxièmes informations au niveau de l'article.

6. Procédé selon l'une des revendications 1 à 3,
dans lequel le remplacement automatique comprend l'exécution d'opérations par l'EST (120, 200) pour :
- convertir la langue et la devise monétaire des premières informations au niveau de l'article pour générer les deuxièmes informations au niveau de l'article ;
- cesser la production des premières informations au niveau de l'article ; et
- commencer la production des deuxièmes informations au niveau de l'article.

7. Procédé selon l'une des revendications 1 à 3,
dans lequel le remplacement automatique comprend :
- la réalisation des opérations par un dispositif informatique distant (112) pour générer les deuxièmes informations au niveau de l'article en convertissant la langue et la devise monétaire des premières informations au niveau de l'article ; et
- l'exécution d'opérations par l'EST (120, 200) pour cesser la production des premières informations au niveau de l'article et commencer à émettre les deuxièmes informations au niveau de l'article.

8. Procédé selon l'une des revendications 1 à 7,
comprenant en outre l'exécution d'opérations par l'EST (120, 200) pour déterminer si une date actuelle est une date de vente présélectionnée pour un article auquel l'EST (120, 200) est attaché, et
comprenant de préférence en outre, la réalisation d'opérations par l'EST (120, 200) pour remplacer les deuxièmes informations au niveau de l'article émises par celui-ci avec les troisièmes informations au niveau de l'article comprenant au moins l'un parmi un prix de vente et un message promotionnel, s'il est déterminé que la date du jour est une date de vente présélectionnée.

9. Étiquette électronique intelligente, EST (120, 200) comprenant :
- un processeur ; et
- un support de stockage lisible par ordinateur comprenant des instructions de programmation qui sont configurées pour amener le processeur à mettre en œuvre un procédé de gestion des stocks, dans lequel les instructions de programmation comprennent des instructions pour :
- recevoir, d'un premier dispositif situé à un premier emplacement, au moins des premières informations au niveau de l'article comprenant une première description de l'article dans une première langue et un premier prix de l'article dans une première devise monétaire ;
- produire les premières informations au niveau de l'article ; et
- remplacer automatiquement les premières informations au niveau de l'article étant produites par les deuxièmes informations au niveau de l'article en réponse à l'arrivée de l'EST au niveau d'un deuxième emplacement différent et éloigné du premier emplacement, les deuxièmes informations au niveau de l'article comprenant la description du premier article converti en une seconde langue différente de la première langue et le prix du premier article converti en une seconde devise monétaire différente de la première devise monétaire.

10. EST (120, 200) selon la revendication 9,
dans lequel le premier emplacement se trouve dans un premier pays et le second emplacement se trouve dans un second pays différent.

11. EST (120, 200) selon la revendication 9 ou 10,
dans lequel les instructions de programmation comprennent en outre des instructions pour faire entrer l'EST (120, 200) dans un premier mode opérationnel dans lequel au moins une opération de l'EST (120, 200) est désactivée, où l'au moins une opération est exclusive des opérations de production d'informations au niveau de l'article, dans lequel les instructions de programmation comprennent en outre de préférence des instructions pour faire passer l'EST (120, 200) du premier mode opérationnel à un second mode opérationnel dans lequel toutes les fonctions de l'EST (120, 200) sont activées, en réponse à l'arrivée de l'EST au niveau du second emplacement.

12. EST (120, 200) selon l'une des revendications 9 à 11,
dans lequel les premières informations sur l'article sont automatiquement remplacées par les deuxièmes informations au niveau de l'article en :
- récupérant les deuxièmes informations au niveau de l'article à partir d'une mémoire interne (208) de l'EST (120, 200) ou d'un dispositif informatique distant (112) ;
- interrompant la production des premières informations au niveau de l'article à partir de l'EST (120, 200) ; et
- commençant la production des deuxièmes informations au niveau de l'article à partir de l'EST (120, 200).

13. EST (120, 200) selon l'une des revendications 9 à 11,
dans lequel les premières informations au niveau de l'article sont automatiquement remplacées par les deuxièmes informations au niveau de l'article en :
- convertissant la langue et la devise monétaire des premières informations au niveau de l'article pour générer les deuxièmes informations au niveau de l'article ;
- interrompant la production des premières informations au niveau de l'article à partir de l'EST (120, 200) ; et
- commençant la production des deuxièmes informations au niveau de l'article à partir de l'EST (120, 200).

14. EST (120, 200) selon l'une des revendications 9 à 11,
dans lequel les premières informations au niveau de l'article sont automatiquement remplacées par les deuxièmes informations au niveau de l'article en :
- recevant les deuxièmes informations au niveau de l'article qui ont été générées par un dispositif informatique distant (112) par le biais d'une conversion de la langue et de la devise monétaire des premières informations au niveau de l'article ;
- interrompant la production des premières informations au niveau de l'article à partir de l'EST (120, 200) ; et
- commençant la production des deuxièmes informations au niveau de l'article à partir de l'EST (120, 200).

15. EST (120, 200) selon l'une des revendications 9 à 14,
dans lequel les instructions de programmation comprennent en outre des instructions permettant de déterminer si une date du jour correspond à une date de vente présélectionnée pour un article auquel l'EST (120, 200) est attaché,
dans lequel les instructions de programmation comprennent de préférence en outre des instructions pour remplacer les deuxièmes informations au niveau de l'article fournies par l'EST (120, 200) par des troisièmes informations au niveau de l'article comprenant au moins un prix de vente et un message promotionnel, s'il est déterminé que la date du jour est une date de vente présélectionnée.
